# EUROPÄISCHE PATENTSCHRIFT

(11) **EP 3 118 507 B1**
(45) Veröffentlichungstag und Bekanntmachung des Hinweises auf die Patenterteilung: **06.06.2018**
(21) Anmeldenummer: 16179663.6
(22) Anmeldetag: 15.07.2016
(51) Int. Cl.: F16L 57/00, F16L 57/06, B65G 51/18, B65G 53/52

(54) **VERFAHREN ZUR HERSTELLUNG EINES FÖRDERROHRES FÜR DEN FESTSTOFFTRANSPORT**
METHOD FOR PRODUCING A FEED PIPE FOR TRANSPORTING SOLID MATERIALS
PROCEDE DE FABRICATION D'UN TUBE D'ACHEMINEMENT DE MATIERES SOLIDES

(30) Priorität: 15.07.2015 DE 102015111455
(43) Veröffentlichungstag der Anmeldung: 18.01.2017
(73) Patentinhaber: Esser -Werke GmbH & Co. KG, 59581 Warstein (DE)
(72) Erfinder: Luig, Rüdiger, 59581 Warstein (DE)
(74) Vertreter: Griepenstroh, Jörg

(56) Entgegenhaltungen:
- EP-A1- 2 784 366
- EP-B1- 0 047 525
- DE-A1- 4 130 167
- DE-A1- 4 202 079
- DE-A1- 4 211 138
- DE-A1- 19 749 447
- DE-C1- 4 010 555
- US-B1- 6 375 228

## Beschreibung

Die vorliegende Erfindung betrifft ein Verfahren zur Herstellung eines Förderrohres für den Feststofftransport gemäß den Merkmalen im Oberbegriff von Patentanspruch 1.

Aus dem Stand der Technik ist es bekannt, zur Förderung von Feststoffen Rohrleitungen einzusetzen. Hierzu werden verschiedene Förderrohre über Fittings und Rohrbögen miteinander verbunden, um Feststoffe, beispielsweise Schlämme, Beton jedoch auch Kies oder sonstige Feststoffe, unter Einsatz eines Fluides zu fördern. Dabei unterliegen die Rohre und Rohrbögen während der Feststoffförderung einem hohen Verschleiß, so dass insbesondere gehärtete Rohre zum Einsatz kommen. Hierbei hat es sich im Stand der Technik als vorteilig erwiesen, doppellagige Rohre zu verwenden, bei denen ein aus einer gehärteten Stahllegierung verwendetes Innenrohr umhüllt mit einem Außenrohr mit eher duktilen Werkstoffeigenschaften eingesetzt werden. Um nunmehr Rohrleitungen zu erstellen, werden diese länglichen Rohrkörper an ihren Enden mit einem Rohrbund versehen, um diese wiederum mit einem Fitting oder einem Rohrbogen sowie einem weiteren länglichen Förderrohr zu verbinden. Die Übergangsstelle von gehärtetem Innenrohr des Förderrohres zum Rohrbund ist dabei jedoch immer eine potentielle Schwachstelle, die auch höherem Verschleiß ausgesetzt ist.

Der Rohrbund wird dabei mit dem Ende des Förderrohrs auf verschiedene Weisen gekoppelt. Beispielsweise kann der Rohrbund aufgeklebt, aufgepresst, aufgeschraubt oder aber auch mit dem Ende des Förderrohrs verschweißt sein.

Aus der DE 42 02 079 A1 ist beispielsweise ein Abgasrohr für eine Verbrennungskraftmaschine eines Kraftfahrzeuges bekannt. Um einen Schiebesitz zu ermöglichen ist eine glockenartige Aufweitung mit Membranteilen vorgesehen.

Ein Feststoffförderrohr ist ferner aus der DE 40 10 555 C1 bekannt.

Aus der EP 2 784 366 A1 ist ein Verfahren zur Herstellung eines Förderrohres für den Feststofftransport, aufweisend einen doppellagigen Rohrkörper mit gehärtetem Innenrohr, mit einem Außenrohr und mit einem endseitigen Rohrbund bekannt. Aufgabe der vorliegenden Erfindung ist es, ein Verfahren bereitzustellen, um ein Förderrohr für einen Feststofftransport mit einem Rohrbund zu koppeln, wobei die Koppelung produktionssicher mit hoher Festigkeit möglich ist, zugleich jedoch eine kurze Herstellungszeit bedarf und wirtschaftlich ist.

Der verfahrenstechnische Teil der Aufgabe wird einem Verfahren zur Herstellung eines Förderrohrs für den Feststofftransport in Patentanspruch 1 gelöst.

Vorteilhafte Ausgestaltungsvarianten der vorliegenden Erfindung sind in den abhängigen Patentansprüchen beschrieben.

Das erfindungsgemäße Verfahren zur Herstellung eines Förderrohrs für den Feststofftransport, wobei das Förderrohr einen doppellagigen Rohrkörper mit einem gehärteten Innenrohr und mit einem an mindestens einem Ende gekoppelten Rohrbund aufweist, zeichnet sich durch folgende Verfahrensschritte aus:
- Bereitstellen eines doppellagigen Rohrkörpers mit einem gehärteten Innenrohr und einem dieses umfassende Außenrohr,
- Optionales Erwärmen des Endes des Außenrohres,
- Aufbringen einer stirnseitigen Druckkraft auf das Außenrohr, so dass sich in einem Abstand zum stirnseitigen Ende des Außenrohres ein Längenabschnitt des Außerohres radial nach außen zu einer Ringwulst aufweitet und ein Trennspalt zwischen Außenrohr und Innenrohr ausgebildet wird,
- Aufsetzen eines Rohrbundes und thermisches Fügen des Rohrbundes mit dem Außenrohr durch eine außen umlaufende thermische Fügenaht im Bereich des Ringwulstes.

Erfindungsgemäß ist es vorgesehen, dass eine umlaufende Ringwulst ausgebildet ist. Die Ringwulst ist dabei durch eine radiale nach außen gerichtete Aufweitung des Außenrohres gekennzeichnet. Somit ist erfindungsgemäß nicht das gesamte Ende aufgeweitet, sondern mit einem Abstand vom freien Ende ein axialer Längenabschnitt. Die umlaufende Ringwulst kann somit auch als Falte im Außenrohr bezeichnet werden. Zwischen der Innenmantelfläche bzw. Innenfläche des Ringwulstes und der Außenmantelfläche des Innenrohres ist somit ein Trennspalt ausgebildet, in dem sich insbesondere Luft befindet. Dies ermöglicht es erfindungsgemäß, dass die umlaufende Bundnaht geschweißt werden kann, ohne dass sich die dabei entstehende Wärmeeinflusszone nachteilig auf das Werkstoffgefüge des gehärteten Innenrohres auswirkt.

Damit nunmehr der Ringwulst aufgebracht wird, ist erfindungsgemäß vorgesehen, dass der doppellagige Rohrkörper bereitgestellt wird und durch Aufbringen einer Druckkraft in Axialrichtung auf das Ende des Rohrkörpers, insbesondere des Außenrohres die Ringwulst ausgebildet wird.

In einfachster Ausgestaltungsvariante geschieht dies durch eine hinreichend hohe Druckkraft, unter Einsatz eines optionalen Außenkonturwerkzeuges.

In bevorzugter Ausgestaltungsvariante kann weiterhin an dem Außenrohr eine Solldeformationsstelle vorgesehen sein, beispielsweise in Form einer umlaufenden Nut im Außenrohr. Die Nut kann an der Außenmantelfläche oder aber auch an der Innenmantelfläche des Außenrohres oder auch an beiden Flächen außen umlaufend ausgebildet sein. Bei Aufbringen der Druckkraft in Axialrichtung wird somit aufgrund der Solldeformationsstelle der Längenabschnitt und somit das entstehen der Ringwulst festgelegt.

In bevorzugter Ausgestaltungsvariante wird jedoch das erfindungsgemäße Verfahren derart durchgeführt, dass zuvor das Ende des Rohrkörpers, insbesondere ausschließlich der Längenabschnitt, an dem die Ringwulst ausgebildet werden soll, erwärmt. Das Erwärmen wird insbesondere mit einem umlaufenden Induktor bzw. einer Induktorspule durchgeführt. Das Erwärmen bietet zwei Vorteile. Zum einen wird das Werkstoffgefüge des Außenrohres aufgrund der Wärmeeinwirkung leichter deformierbar. Zum anderen findet aufgrund der thermischen Erwärmung bereits ein radiales Aufweiten in dem erwärmten Bereich statt. Damit das Innenrohr durch diese Erwärmung keine Gefügeänderung erfährt, ist bevorzugt ein Innenkühlwerkzeug vorgesehen, beispielsweise eine Innenkühlbrause.

Nach Ausbildung der Ringwulst wird dann der Rohrbund gekoppelt bzw. aufgeschoben und mit einer umlaufenden Fügenaht, auch als thermische Fügenaht bezeichnet, thermisch mit der Außenmantelfläche des Außenrohres gefügt. Bei Abkühlen der thermischen Fügenaht kann sich der Bereich des Ringwulstes wiederum deformieren durch radiale Kontraktion. Insbesondere kann somit die Innenfläche der Ringwulst wiederum an der Außenmantelfläche des Innenrohres formschlüssig zur Anlage kommen. Für den eigentlichen Schweißvorgang ist jedoch der Ringwulst radial aufgeweitet, so dass eine physische Entkoppelung von Innenmantelfläche des Außenrohres und Außenmantelfläche des Innenrohres vorliegt und aufgrund des thermischen Fügens der thermischen Fügenaht stattfindet.

Insbesondere wird die Erwärmung bei 250°C bis 1500°C, bevorzugt bei 750°C bis 1500°C und ganz besonders bevorzugt bei 750°C bis 1000°C durchgeführt, wobei bevorzugt nur der axiale Längenabschnitt zum Ausbilden der Ringwulst erwärmt wird. Besonders bevorzugt wird ein Außenrohr mit einer Stahllegierung verwendet, die einen Kohlenstoffgehalt von 0,05 bis 0,35 Gew% aufweist. Es handelt sich somit insbesondere um eine Stahllegierung, die bedingt härtbar ist. Bei Erwärmung auf eine der oben genannten Temperaturen erfolgt eine Gefügeumwandlung, insbesondere in die austenitische Gefügeumwandlungsstufe. Dies bringt dann die radial nach außen gerichtete Aufweitung mit sich. Soll nunmehr in einem direkten Folgeprozess die thermische Fügenaht aufgebracht werden, dies kann nach dem Aufweiten ohne Zwischenbehandlung durchgeführt werden. Soll jedoch nach dem Aufweiten der Rohrkörper zunächst zwischengelagert werden, kann das aufgeweitete Außenende des Außenrohres durch Abschrecken in ein Zwischenstufengefüge und/oder martensitische Gefügeumwandlungsstufe überführt werden, so dass der aufgeweitete Zustand beibehalten wird.

Die thermische Fügenaht ist dann erfindungsgemäß bezogen auf die Axialrichtung des Rohrkörpers derart positioniert, dass in Radialrichtung nach innen zwischen dem Innenrohr und dem Außenrohr der Trennspalt ausgebildet ist. Insbesondere wird die thermische Fügenaht durch ein Schweißverfahren, beispielsweise Elektronenstrahlschweißen oder MIG/MAG Schweißen oder WIG Schweißen durchgeführt. Es ist jedoch auch vorstellbar, dass die thermische Fügenaht durch Löten aufgebracht wird. Insbesondere bei einem Schweißvorgang kann die thermische Fügenaht auch als Bundschweißnaht bezeichnet werden.

Im Falle der erfindungsgemäßen Verwendung eines Außenkonturwerkzeuges kann durch Platzierung des Außenkonturwerkzeuges in Axialrichtung der Längenabschnitt definiert werden, in dem sich der Ringwulst in Folge des Aufbringens einer in Axialrichtung gerichteten Druckkraft ausbildet.

Das Aufbringen der Druckkraft selbst kann mit einem Druckwerkzeug durchgeführt werden, so dass nach Ausbilden der Ringwulst das Druckwerkzeug wiederum entfernt wird. Das Aufbringen der Druckkraft kann jedoch auch durch das Aufsetzen des Rohrbundes und somit über den Rohrbund selbst auf das Außenrohr aufgebracht werden. In der Folge kann nach Ausbilden des Ringwulstes der Rohrbund direkt an Ort und Stelle verbleiben und das thermische Fügen stattfinden.

In diesem Fall kann auf eine Verwendung eines Außenkonturwerkzeuges verzichtet werden, da insbesondere der Rohrbund die Funktion des Außenkonturwerkzeuges übernimmt. Besonders bevorzugt ist ein nach innen gerichteter Fortsatz an dem Rohrbund vorhanden, so dass bei Aufpressen des Rohrbundes gezielt eine Druckkraft nur auf die Stirnfläche des Außenrohres übertragen wird.

Es kann im Rahmen der Erfindung jedoch auch zunächst nur ein Teil des Rohrbundes aufgesetzt sein, der dann die Funktion eines Außenkonturwerkzeuges und/oder eines entsprechenden Abstandswerkzeuges übernimmt. Nach dem Aufweiten des Ringwulstes kann dann der restliche Teil des Rohrbundes aufgesetzt werden und mit dem Ringwulst thermisch gefügt werden.

Bevorzugt ist der Rohrbund selbst ebenfalls doppellagig aufweisend einen Außenring bzw. Außenbund und Innenring ausgebildet.

Die vorliegende Anmeldung betrifft weiterhin ein Förderrohr für den Feststofftransport, welches einen doppellagigen Rohrköper mit einem endseitig gekoppelten Rohrbund aufweist, wobei der Rohrbund mit dem Außenrohr des Rohrkörpers umlaufend mit einer thermischen Fügenaht gekoppelt ist und wobei auf eine Radialrichtung bezogen unter der thermischen Fügenaht das Außenrohr radial umlaufend unter Ausbildung eines Trennspaltes zu dem Innenrohr mit einer Ringwulst aufgeweitet ist. Die thermische Fügenaht ist im Bereich der Ringwulst ausgeführt.

Das Förderrohr kann insbesondere mit dem erfindungsgemäßen zuvor beschriebenen Verfahren hergestellt sein. Durch die Ringwulst sowie den damit einhergehenden Trennspalt wird bei Aufbringen der thermischen Fügenaht auf die Außenmantelfläche des Außenrohres die thermische Einwirkung auf das insbesondere gehärtete Innenrohr unterbunden. Somit kann das Innenrohr, insbesondere das Werkstoffgefüge des gehärteten Innenrohrs, durch die Wärmeeinflusszone der thermischen Fügenaht nicht negativ beeinträchtigt werden.

Weitere Vorteile, Merkmale, Eigenschaften und Aspekte der vorliegenden Erfindung sind Gegenstand der nachfolgenden Beschreibung. Bevorzugte Ausgestaltungsvarianten werden in den schematischen Figuren dargestellt. Diese dienen dem einfachen Verständnis der Erfindung. Es zeigen:
- Figur 1: ein erfindungsgemäßes Herstellungsverfahren eines Förderrohres,
- Figur 2: eine Teilansicht gemäß Figur 1,
- Figur 3: das erfindungsgemäß hergestellte Förderrohr nach Abschluss des Herstellungsverfahrens und
- Figur 4: die Teilansicht von Figur 3.

In den Figuren werden für gleiche oder ähnliche Bauteile dieselben Bezugszeichen verwendet, auch wenn eine wiederholte Beschreibung aus Vereinfachungsgründen entfällt.

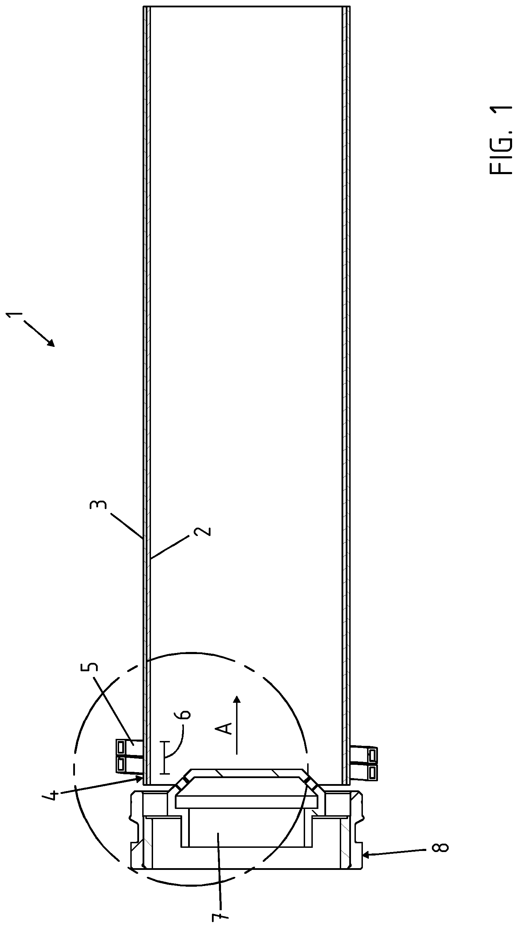

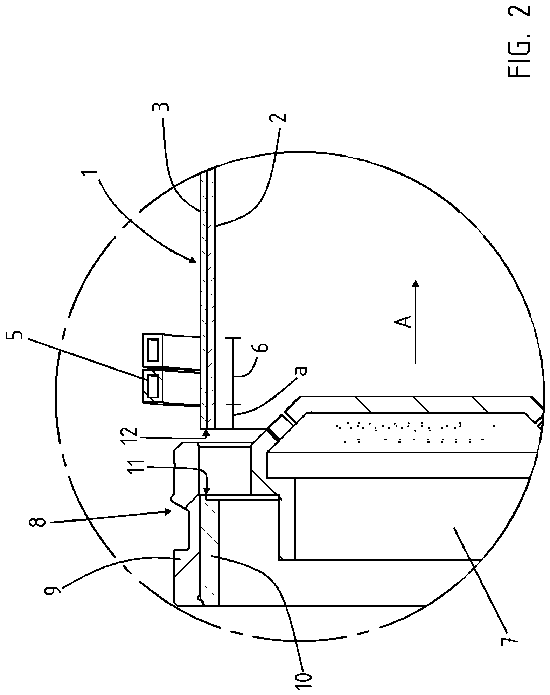

Figur 1 zeigt eine Schnittansicht während eines erfindungsgemäßen Verfahrens zur Herstellung eines Förderrohrs 18. Hierzu ist ein doppellagiger Rohrkörper 1 ausgebildet aufweisend ein Innenrohr 2, welches gehärtet ist, sowie ein das Innenrohr 2 umfassendes Außenrohr 3. Ein Ende 4 des Rohrkörpers 1 wird durch einen Induktor 5 in Form einer Induktionsspule erwärmt, wobei insbesondere gezielt ein in Axialrichtung A definierter Längenabschnitt 6 erwärmt wird. Der Längenabschnitt 6 ist in einem Abstand a zur Stirnseite 12 angeordnet, wie in Figur 2 dargestellt. Ferner ist ein Innenkühlwerkzeug 7 vorgesehen, so dass das Innenrohr 2 während der Erwärmung des Längenabschnittes 6 und des Außenrohres 3 nicht erwärmt wird. Sodann wird ein doppellagiger Rohrbund 8 auf das Ende 4 in Axialrichtung A geschoben, wobei der Rohrbund 8 einen Außenbund 9 sowie einen Innenring 10 aufweist. Der Innenring 10 selbst weist gemäß Detailansicht von Figur 2 einen in Axialrichtung A orientierten Fortsatz 11 auf, welcher radial umlaufend ist und bei weiterem Aufschieben des Rohrbundes 8 formschlüssig an der Stirnseite 12 insbesondere des Außenrohres 3 zur Anlage kommt. Der Rohrbund 8 liegt dann zumindest teilweise auf der Außenmantelfläche 19 des Außenrohres 3 auf, so dass das Außenrohr 3 sich hier nicht aufweitet.

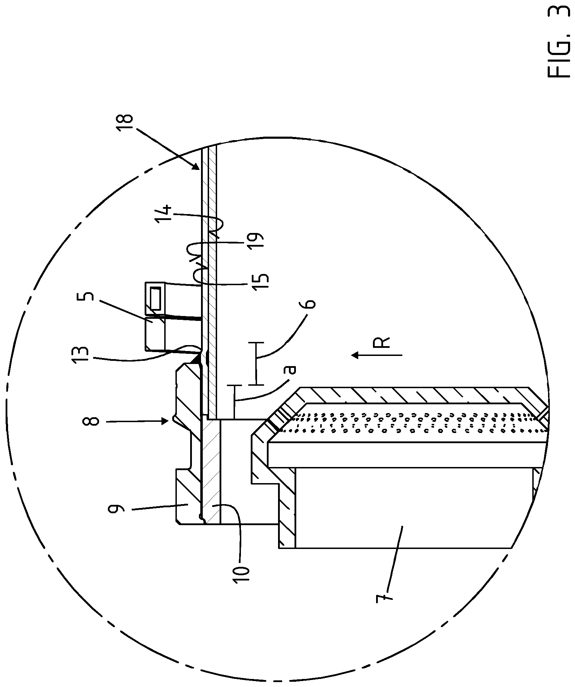

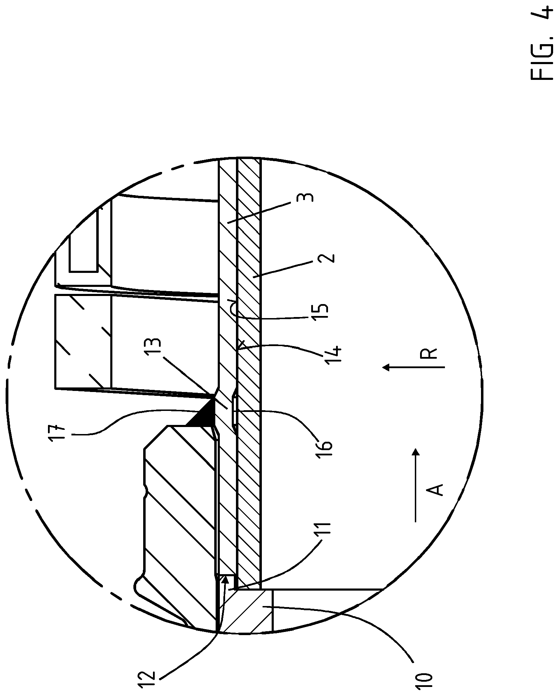

Bei weiterem Aufpressen des Rohrbundes 8 in Axialrichtung A kommt es dann zu einer Ausgestaltung gemäß der Figuren 3 und 4. Der zuvor erwärmte Längenabschnitt 6 wird in Radialrichtung R außen umlaufend aufgeweitet und bildet eine umlaufende Ringwulst 13 aus. Somit wird die Innenmantelfläche 14 des Außenrohres 3 von der Außenmantelfläche 15 des Innenrohres 2 unter Ausbildung eines Trennspaltes 16 im Bereich der Ringwulst 13 entkoppelt. Eine umlaufende thermische Fügenaht 17 sowie deren auf das Außenrohr 3 wirkende Wärmeeinflusszone sind somit thermisch von dem Innenrohr 2 entkoppelt, so dass gerade keine Wärmeleitung durch das Außenrohr 3 in das Innenrohr 2 erfolgt.

Der Fortsatz 11 des Innenringes 10 hat dabei die Stirnseite 12 des Außenrohres 3 in Axialrichtung A relativ gegenüber dem Innenrohr 2 verschoben, so dass die Ringwulst 13 ausgebildet ist. Die Ringwulst 13 weist somit einen Abstand a zum freien Ende 4 des Rohrkörpers 1 auf. Somit ist nach Ausbildung der thermischen Fügenaht 17 das erfindungsgemäß hergestellte Förderrohr 18 bestehend aus Rohrkörper 1 und Rohrbund 8 fertig hergestellt. Wie in Fig. 3 zu erkennen ist, ist es auch möglich, dass sich der Induktor (5) in Axialrichtung (A) verschiebt.

Nicht näher dargestellt ist, dass sich der umlaufende Ringwulst 13 nach Abkühlen wieder in Radialrichtung R kontrahieren kann, so dass der Trennspalt 16 nicht mehr vorhanden ist und die Innenfläche des Ringwulstes 13 formschlüssig an der Außenmantelfläche 15 des Innenrohrs 2 anliegt.

### Bezugszeichen:

- 1 -: Rohrkörper
- 2 -: Innenrohr
- 3 -: Außenrohr
- 4 -: Ende zu 1
- 5 -: Induktor
- 6 -: Längenabschnitt
- 7 -: Innenkühlwerkzeug
- 8 -: Rohrbund
- 9 -: Außenbund zu 8
- 10 -: Innenring zu 8
- 11 -: Fortsatz zu 10
- 12 -: Stirnseite
- 13 -: Ringwulst
- 14 -: Innenmantelfläche zu 3
- 15 -: Außenmantelfläche zu 2
- 16 -: Trennspalt
- 17 -: thermische Fügenaht
- 18 -: Förderrohr
- 19 -: Außenmantelfläche zu 3

- A -: Axialrichtung
- a -: Abstand
- R -: Radialrichtung

## Patentansprüche

1. Verfahren zur Herstellung eines Förderrohres (18) für den Feststofftransport, aufweisend einen doppellagigen Rohrkörper (1) mit gehärtetem Innenrohr (2) und mit einem an mindestens einem Ende (4) gekoppelten Rohrbund (8), mit dem folgenden Verfahrensschritt:
- Bereitstellen eines doppellagigen Rohrkörpers (1) mit gehärtetem Innenrohr (2) und einem dieses umfassenden Außenrohr (3),
**gekennzeichnet durch** folgende Verfahrensschritte:
- Optionales Erwärmen des Endes des Außenrohres (3),
- Aufbringen einer stirnseitigen Druckkraft auf das Außenrohr (3), so dass sich in einem Abstand (a) zum stirnseitigen Ende (12) des Außenrohres (3) ein Längenabschnitt (6) des Außerohres (3) radial nach außen zu einer Ringwulst (13) aufweitet und ein Trennspalt (16) zwischen Außenrohr (3) und Innenrohr (2) ausgebildet wird,
- Aufsetzen eines Rohrbundes (8) und thermisches Fügen des Rohrbundes (8) mit dem Außenrohr (3) durch eine außen umlaufende thermische Fügenaht (17) im Bereich des Ringwulstes (13).

2. Verfahren nach Anspruch 1, **dadurch gekennzeichnet, dass** das Erwärmen mit einem Induktor (5) durchgeführt wird und/oder dass das Ende des Außenrohres (3) auf 250°C bis 1500°C, insbesondere auf 750°C bis 1500°C, bevorzugt auf 750°C bis 1000°C erwärmt wird.

3. Verfahren nach einem der Ansprüche 1 bis 2, **dadurch gekennzeichnet, dass** nur der Längenabschnitt (6) zum Ausbilden der Ringwulst erwärmt wird.

4. Verfahren nach einem der Ansprüche 1 bis 3, **dadurch gekennzeichnet, dass** ein Außenrohr (3) mit einer Stahllegierung verwendet wird, die einen Kohlenstoffgehalt von 0,05 bis 0,35Gew% aufweist.

5. Verfahren nach einem der Ansprüche 1 bis 4, **dadurch gekennzeichnet, dass** die thermische Fügenaht (17) bezogen auf eine Axialrichtung (A) des Rohrkörpers (1) derart positioniert wird, dass in Radialrichtung (R) nach innen zwischen dem Innenrohr (2) und dem Außenrohr (3) der Trennspalt (16) ausgebildet ist.

6. Verfahren nach einem der Ansprüche 1 bis 5, **dadurch gekennzeichnet, dass** bei Aufbringen der Druckkraft ein Außenkonturwerkzeug auf die Außenmantelfläche (19) des Außenrohres (3) aufgesetzt ist.

7. Verfahren nach einem der Ansprüche 1 bis 5, **dadurch gekennzeichnet, dass** bei Aufbringen der Druckkraft mindestens ein erster Rohrbundteil auf die Außenmantelfläche (19) des Außenrohrs (3) aufgesetzt ist.

8. Verfahren nach einem der Ansprüche 1 bis 5, **dadurch gekennzeichnet, dass** bei Aufbringen der Druckkraft der Rohrbund (8) auf die Außenmantelfläche (19) des Außenrohres (3) aufgesetzt ist.

9. Verfahren nach einem der Ansprüche 1 bis 8, **dadurch gekennzeichnet, dass** die Druckkraft durch ein Werkzeug aufgebracht wird und das Werkzeug nach der Formung der Ringwulst (13) entfernt wird.

10. Verfahren nach einem der Ansprüche 1 bis 9 **dadurch gekennzeichnet, dass** nach Ausbilden der Ringwulst (13) das Außenrohr (3) abgeschreckt wird.

11. Verfahren nach einem der Ansprüche 1 bis 10, **dadurch gekennzeichnet, dass** die Druckkraft über den auf das Förderrohr (18) aufgesetzten Rohrbund (8) auf das Außenrohr (3) aufgebracht wird.

12. Verfahren nach einem der Ansprüche 1 bis 11, **dadurch gekennzeichnet, dass** die thermische Fügenaht (17) beim Erkalten sich kontrahiert, so dass das Außenrohr (3) im Bereich der Ringwulst (13) mit seiner Innenmantelfläche (14) an der Außenmantelfläche (15) des Innenrohres (2) zur Anlage kommt.

13. Verfahren nach einem der Ansprüche 1 bis 12, **dadurch gekennzeichnet, dass** in dem Außenrohr im Bereich, in dem die Ringwulst (13) ausgebildet werden soll, eine umlaufende Solldeformationsstelle ausgebildet ist, insbesondere ist die umlaufende Solldeformationsstelle als umlaufende Nut ausgebildet ist.

## Claims

1. Method for producing a conveying pipe (18) for the transport of solids, comprising a double-layered pipe body (1) having a hardened inner pipe (2), and with a pipe collar (8) coupled to at least one end (4), comprising the following method steps:
- providing a double-layered pipe body (1) having a hardened inner pipe (2) and an outer pipe (3) which encases the inner pipe,
**characterised by** the following method steps:
- optionally heating the end of the outer pipe (3),
- applying a compressive force on the end face of the outer pipe (3), so that a longitudinal segment (6) of the outer pipe (3) expands radially outwards to form an annular bead (13) at a distance (a) from the end (12) at the end face of the outer pipe (3), and a separating gap (16) is formed between the outer pipe (3) and the inner pipe (2),
- placing a pipe collar (8) thereon, and thermally joining the pipe collar (8) to the outer pipe (3) by an external, circumferential, thermal joining seam (17) in the region of the annular bead (13).

2. Method according to claim 1, **characterised in that** the heating is carried out with an inductor (5) and/or that the end of the outer pipe (3) is heated to 250°C to 1500°C, in particular to 750°C to 1500°C, preferably to 750°C to 1000°C.

3. Method according to any of claims 1 to 2, **characterised in that** only the longitudinal segment (6) is heated to form the annular bead.

4. Method according to any of claims 1 to 3, **characterised in that** an outer pipe (3) is used which has a steel alloy with a carbon content of 0.05 to 0.35 wt %.

5. Method according to any of claims 1 to 4, **characterised in that** the thermal joining seam (17) is positioned, with respect to an axial direction (A) of the pipe body (1), in such a manner that the separating gap (16) is formed between the inner pipe (2) and the outer pipe (3) inwardly in the radial direction (R).

6. Method according to any of claims 1 to 5, **characterised in that** when the compressive force is applied, an outer contour tool is placed on the outer shell surface (19) of the outer pipe (3).

7. Method according to any of claims 1 to 5, **characterised in that** when the compressive force is applied, at least one first pipe collar part is placed on the outer shell surface (19) of the outer pipe (3).

8. Method according to any of claims 1 to 5, **characterised in that** when the compressive force is applied, the pipe collar (8) is placed on the outer shell surface (19) of the outer pipe (3).

9. Method according to any of claims 1 to 8, **characterised in that** the compressive force is applied by a tool and the tool is removed after the shaping of the annular bead (13).

10. Method according to any of claims 1 to 9, **characterised in that** the outer pipe (3) is quenched after the annular bead (13) has formed.

11. Method according to any of claims 1 to 10, **characterised in that** the pipe collar is placed on the conveying pipe (18) and the compressive force is applied on the outer pipe (3) via the pipe collar (8).

12. Method according to any of claims 1 to 11, **characterised in that** the thermal joining seam (17) contracts on cooling, so that the outer pipe (3) comes to lie with its inner shell surface (14) against the outer shell surface (15) of the inner pipe (2) in the region of the annular bead (13).

13. Method according to any of claims 1 to 12, **characterised in that** a circumferential predetermined deformation point is formed in the outer pipe in the region in which the annular bead (13) is to be formed, and in particular the circumferential predetermined deformation point is formed as a circumferential groove.

## Revendications

1. Procédé de fabrication d'un tube d'acheminement (18) pour le transport de substances solides, présentant un corps tubulaire à double couche (1) avec un tube interne durci (2) et une canalisation (8) couplée à au moins une extrémité (4), le procédé comprenant l'étape suivante :
- la mise en oeuvre d'un corps tubulaire à double couche (1) avec un tube interne durci (2) et un tube externe (3) entourant celui-ci,
**caractérisé par** les étapes de procédé suivantes :
- le chauffage éventuel de l'extrémité du tube externe (3),
- l'application d'une force de compression avant sur le tube externe (3) de sorte que, à une distance (a) de l'extrémité avant (12) du tube externe (3), une section longitudinale (6) du tube externe (3) soit évasée radialement vers l'extérieur en un tore (13) et qu'une fente séparatrice (16) soit formée entre le tube externe (3) et le tube interne (2),
- la mise en place d'une canalisation (8) et d'une jonction thermique de la canalisation (8) avec le tube externe (3) via une soudure de jonction thermique circulant extérieurement (17) dans la zone du tore (13).

2. Procédé selon la revendication 1, **caractérisé en ce que** le chauffage est réalisé avec un inducteur (5) et/ou l'extrémité du tube externe (3) est chauffée à une température de 250°C à 1500°C, en particulier de 750°C à 1 500°C, de préférence de 750°C à 1 000 °C.

3. Procédé selon l'une quelconque des revendications 1 et 2, **caractérisé en ce que** seule la section longitudinale (6) est chauffée pour former le tore.

4. Procédé selon l'une quelconque des revendications là 3, **caractérisé en ce qu'**on utilise un tube externe (3) avec un alliage d'acier qui présente une teneur en carbone de 0,05 à 0,35 % en poids.

5. Procédé selon l'une quelconque des revendications 1 à 4, **caractérisé en ce que** la soudure de jonction thermique (17) est positionnée par rapport à une direction axiale (A) du corps tubulaire (1) de sorte que la fente séparatrice (16) soit formée dans la direction radiale (R) vers l'intérieur entre le tube interne (2) et le tube externe (3).

6. Procédé selon l'une quelconque des revendications 1 à 5, **caractérisé en ce que**, lors de l'application de la force de compression, un outil de contour externe est mis en place sur la surface enveloppante externe (19) du tube externe (3).

7. Procédé selon l'une quelconque des revendications 1 à 5, **caractérisé en ce que**, lors de l'application de la force de compression, au moins une première partie de la canalisation est mise en place sur la surface enveloppante externe (19) du tube externe (3).

8. Procédé selon l'une quelconque des revendications 1 à 5, **caractérisé en ce que**, lors de l'application de la force de compression, la canalisation (8) est mise en place sur la surface enveloppante externe (19) du tube externe (3).

9. Procédé selon l'une quelconque des revendications 1 à 8, **caractérisé en ce que** la force de compression est appliquée par un outil et l'outil est retiré après la formation du tore (13).

10. Procédé selon l'une quelconque des revendications 1 à 9, **caractérisé en ce que**, après la formation du tore (13), le tube externe (3) est trempé.

11. Procédé selon l'une quelconque des revendications 1 à 10, **caractérisé en ce que** la force de compression est appliquée sur le tube externe (3) via la canalisation (8) mise en place sur le tube d'acheminement (18).

12. Procédé selon l'une quelconque des revendications 1 à 11, **caractérisé en ce que** la soudure de jonction thermique (17) se contracte lors du refroidissement de sorte que le tube externe (3) vienne, dans la zone du tore (13), s'appliquer avec sa surface enveloppante interne (14) sur la surface enveloppante externe (15) du tube interne (2).

13. Procédé selon l'une quelconque des revendications 1 à 12, **caractérisé en ce que**, dans le tube externe, dans la zone dans laquelle le tore (13) doit être formé, un point de déformation théorique périphérique est formé, en particulier le point de déformation théorique se présente sous la forme d'une encoche périphérique.
